# EUROPÄISCHE PATENTANMELDUNG

(11) **EP 3 905 499 A1**
(43) Veröffentlichungstag der Anmeldung: **03.11.2021**
(21) Anmeldenummer: 20171760.0
(22) Anmeldetag: 28.04.2020
(51) Int. Cl.: H02M 3/158, H02M 1/42, H02M 1/00

(54) **VERFAHREN ZUM ANSTEUERN EINES TIEF-HOCHSETZSTELLERS**

(71) Anmelder: Siemens Aktiengesellschaft, 80333 München (DE)
(72) Erfinder: Schulz, Stefan, 2152 Gnadendorf (AT)
(74) Vertreter: Maier, Daniel Oliver

(57) **Zusammenfassung**

Die gegenständliche Erfindung betrifft ein Verfahren zur Ansteuerung eines Gleichspannungswandlers, insbesondere eines getakteten Tief-Hochsetzstellers (TH), welcher zumindest zwei Schaltelemente und eine Induktivität bzw. Drossel aufweist und von welchem eine Eingangsspannung (Ue) in eine geregelte Ausgangsspannung (Ua) umgewandelt wird. Dazu werden die Schaltelemente des Tief-Hochsetzstellers (TH) mittels pulsweiten- und frequenzmodulierter Steuersignale (S1, S2) mit einer variablen Schaltfrequenz entsprechend angesteuert. Die pulsweiten- und frequenzmodulierten Steuersignale (S1, S2) für die Schaltelemente werden aus einer Stellgröße (SG) abgeleitet, welche von einer Reglereinheit (RE) zur Regelung der Ausgangsspannung (Ua) zur Verfügung gestellt wird. Zum Bestimmen des Einschaltzeitpunktes der Schaltelemente und zum Start eines neuen Schaltzyklus wird laufend ein Spannungsverlauf an den Schaltelementen ermittelt bzw. überwacht (101). Bei Erkennen eines Spannungsminimums des ermittelten Spannungsverlaufs an den Schaltelementen (102) werden die Schaltelemente eingeschaltet (104), sofern eine vorgegebene minimale Periodendauer (Tmin) überschritten wurde (103). Wird im Spannungsverlauf an den Schaltelementen bei bzw. nach Ablauf einer vorgegebenen maximalen Periodendauer (Tmax) (106) kein Spannungsminimum festgestellt (102), so werden die Schaltelemente trotzdem eingeschaltet (104), um eine minimale Schaltfrequenz zum Takten der Schaltelemente einhalten zu können. Durch die Vorgabe einer minimalen Periodendauer (Tmin) wird verhindert, dass eine maximale Schaltfrequenz zum Takten der Schaltelemente überschritten wird. Die jeweiligen Abschaltzeitpunkte der Schaltelemente werden von den jeweiligen Steuersignalen (S1, S2) für das jeweilige Schaltelemente vorgegeben (105) .

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf ein Verfahren zur Ansteuerung eines Gleichspannungswandlers, insbesondere eines getakteten Tief-Hochsetzstellers, welcher zumindest zwei Schaltelemente und eine Induktivität bzw. Drossel aufweist und von welchem eine Eingangsspannung in eine geregelte Ausgangsspannung umgewandelt wird. Dazu werden die Schaltelemente des Tief-Hochsetzstellers mittels pulsweiten- und frequenzmodulierter Steuersignale mit einer gemeinsamen, variablen Schaltfrequenz entsprechend angesteuert. Ein jeweiliges pulsweiten- und frequenzmoduliertes Steuersignal für ein jeweiliges Schaltelement wird aus einer Stellgröße abgeleitet, welche von einer Reglereinheit zur Regelung der Ausgangsspannung zur Verfügung gestellt wird.

### Stand der Technik

Heutzutage kommen in vielen Bereichen (z.B. Automatisierung, Automotivbereich, etc.) Schaltnetzteile, welche auch als Schaltgeräte bezeichnet werden, als Stromversorgungen für z.B. Steuergeräte, elektronische Geräte, Steuerungen, Antriebe, etc. zum Einsatz. Schaltnetzteile werden insbesondere eingesetzt, um eine Last bzw. einen Verbraucher an ein Stromnetz oder eine Stromquelle (z.B. Batterie) anzubinden und mit einer meist konstanten und häufig vorgegebenen Spannung zu versorgen. Dazu wird vom Schaltnetzteil eine meist unstabilisierte Eingangsspannung - üblicherweise eine aus einer Stromquelle stammende Gleich- oder Wechselspannung - in eine konstante Ausgangsspannung umgewandelt, wobei eine Konstanz der Ausgangsspannung und/oder des Ausgangsstroms durch eine Steuerung des Energieflusses in das Schaltnetzteil und den angeschlossenen Verbraucher erreicht wird. Je nach Anwendung bzw. je nach Bedarf des jeweiligen Verbrauchers kann die Ausgangsspannung größer oder kleiner als die Eingangsspannung sein.

Schaltnetzteile sind in den verschiedensten Ausprägungen bekannt. Es kann beispielsweise für eine Anbindung an ein Wechselspannungsnetz oder eine Wechselspannungsquelle eine Gleichrichtung der Eingangsspannung bzw. der Wechselspannung im Schaltnetzteil durchgeführt werden. Für die Umwandlung der gleichgerichteten Eingangsspannung bzw. einer unstabilisierten und/oder schwankenden Gleichspannung in eine konstante Ausgangsspannung werden in Schaltnetzteilen üblicherweise sogenannte Gleichspannungswandler oder DC-DC-Wandler eingesetzt. Weiterhin können Gleichspannungswandler insbesondere bei Hochleistungsanwendungen beispielsweise als Filter und/oder zur aktiven Leistungsfaktorkorrektur (PFC) in Schaltnetzteilen zum Einsatz kommen, um z.B. negative Einflüsse auf das Stromnetz - eine so genannte Netzrückwirkung - so gering wie möglich zu halten.

Ein Gleichspannungswandler bzw. DC-DC-Wandler bezeichnet üblicherweise eine elektrische Schaltung, welche eine am Eingang als Eingangsspannung zugeführte Gleichspannung (beispielsweise eine gleichgerichtete Wechselspannung oder eine Gleichspannung aus einem Batteriemodul) in eine Ausgangsspannung mit höherem, gleichem oder niedrigerem Spannungsniveau umwandelt. Eine Umsetzung der Eingangsspannung in die meist vorgegebene Ausgangsspannung erfolgt üblicherweise mittels zumindest einem periodisch arbeitenden elektronischen Schaltelement und mittels zumindest einem Energiespeicher, welcher z.B. als Induktivität ("induktiver Wandler") - je nach Topologie des Wandlers - in Form einer Spule bzw. Drossel oder eines Wandler-Transformators ausgeführt sein kann. Im Gegensatz dazu werden Wandler mit kapazitiver Speicherung (kapazitiver Wandler) als Ladungspumpen bezeichnet.

Gleichspannungswandler, welche eine Ausgangsspannung größer, gleich und/oder kleiner als eine Eingangsspannung - je nach Anwendungsfall - liefern können sollen, werden üblicherweise als Tief-Hochsetzsteller bzw. Abwärts-Aufwärtswandler oder Buck-Boost-Konverter bezeichnet. Beim Tief-Hochsetzsteller ist beispielsweise einem Tiefsetzsteller bzw. Abwärtswandler ein Hochsetzsteller bzw. Aufwärtswandler nachgeschaltet. Dabei weisen sowohl der Tiefsetzsteller als auch der Hochsetzsteller jeweils zumindest ein Schaltelement auf und teilen sich einen als Induktivität bzw. Spule ausgeführten, gemeinsamen Energiespeicher. Beispielhafte Schaltungen eines Buck-Boost-Konverters bzw. Tief-Hochsetzstellers sind z.B. aus den Schriften EP 2 188 886 B1 oder EP 2 479 878 B1 bekannt.

Tief-Hochsetzsteller werden bei schwankenden Eingangsspannungen, wie z.B. einer gleichgerichteten Wechselspannung, welche einen so genannten Rippel bzw. Restwelligkeit aufweist, eingesetzt. Dabei arbeitet der Tief-Hochsetzsteller in Abhängigkeit von einem Verhältnis zwischen Eingangs- und Ausgangsspannung in unterschiedlichen Betriebsmodi. Ist die Eingangsspannung z.B. größer als die Ausgangsspannung, wird der Tief-Hochsetzsteller nur im Tiefsetzer- bzw. Buck-Modus betrieben. D.h. in diesem Modus wird nur das Schaltelement des Tiefsetzstellers geschaltet, während das Schaltelement des Hochsetzstellers konstant ausgeschaltet bleibt. Unterschreitet eine Differenzspannung zwischen Eingangs- und Ausgangsspannung des Tief-Hochsetzstellers einen gewissen Mindestwert, so wird der Tief-Hochsetzsteller üblicherweise im so genannten Mischbetrieb betrieben. D.h. es werden sowohl das Schaltelement des Tiefsetzstellers als auch das Schaltelement des Hochsetzstellers mit identer Frequenz, aber unterschiedlicher Einschaltzeit getaktet. Eine Ansteuerung für einen Tief-Hochsetzsteller kann beispielsweise einen Pulsbreitenmodulator enthalten, dessen Tastverhältnis zum Zwecke der Regelung, beispielsweise auf konstante Ausgangsspannung, geändert werden kann.

Für die Ansteuerung eines Tief-Hochsetzstellers, welcher beispielsweise zwei bzw. vier Schaltelemente sowie eine gemeinsame Induktivität bzw. Drossel aufweist, gibt es z.B. am Markt verfügbare Ansteuereinheiten, welche insbesondere bei kleineren Eingangs- bzw. Ausgangsspannungen (z.B. bis zu 50 Volt) eingesetzt werden können. Diese Ansteuereinheiten betreiben den Tief-Hochsetzsteller beispielsweise mit einer fixen Schaltfrequenz - d.h. die Schaltelemente werden mit einer fixen Anzahl von Ein- und Ausschaltvorgängen pro Zeitintervall geschaltet. Dies hat insbesondere bei höheren Eingangs- bzw. Ausgangsspannungen den Nachteil, dass die Schaltelemente nicht zum optimalen Zeitpunkt eingeschaltet werden und dass durch die fixfrequente Ansteuerung hohe Schaltverluste und hohe Störaussendungen (z.B. in Form von Geräuschen und/oder elektromagnetischer Strahlung (EMV-Störungen)) auftreten können.

Vor allem in einem kontinuierlichen Betrieb (CCM - continuous conduction mode), aber auch in einem diskontinuierlichen oder lückenden Modus (DCM - discontinuous conduction mode) des Tief-Hochsetzstellers, bei welchem das jeweilige Schaltelement eingeschaltet wird, nachdem die Induktivität entmagnetisiert ist und eine Totzeit auftritt, kann es bei einer fixfrequenten Ansteuerung der Schaltelemente zu hohen Schaltverlusten kommen, wenn parasitäre Kapazitäten, welche z.B. in Schaltelementen (z.B. Feldeffekttransistoren, etc.) und in Induktivitäten (z.B. Transformatoren, Drosseln, etc) enthalten sind, vor dem nächsten Einschaltzeitpunkt auf entsprechend hohe Spannungen aufgeladen sind. Wenn das Schaltelement im nächsten Taktzyklus einschaltet, werden die parasitären Kondensatoren über den Transistor entladen bzw. umgeladen und erzeugen dabei je nach anliegender Spannung mehr oder weniger hohe Stromspitzen, welche bei entsprechend hoher Spannung zu hohen Schaltverlusten führen.

Aus der Schrift S. Waffler et al., "A Novel Low-Loss Modulation Strategy for High-Power Bi-directional Buck+Boost Converters", IEEE Transactions on Power Electronics, Vol. 24, No. 6, Seiten 1589-1599, Juni 2009., ist ein Ansteuerverfahren für einen Tief-Hochsetzsteller mit vier Schaltelementen bekannt. Dabei werden die Schaltelemente stets während einer Nullspannung eingeschaltet, um Schaltverluste zu minimieren. D.h. es wird ein so genanntes zero voltage-switching (ZVS) durchgeführt. Dazu werden zum Erreichen der Nullspannungsschaltbedingung die Schaltelemente gezielt angesteuert, um stets einen negativen Strom in der Induktivität am Beginn und am Ende einer Schaltperiode sicherzustellen, wodurch keine parasitären Kapazitäten hart umgeladen werden müssen. Eine derartige Ansteuerung kann zwar auch bei relativ hohen Eingangs- bzw. Ausgangsspannungen (z.B. bei Eingangsspannungen von 100 zu bis 1000 Volt) eingesetzt werden. Es bedarf allerdings eines komplexen, kosten- und bautteileintensiven Schaltungsaufbaus mit z.B. vier Schaltelementen und einer schnellen, z.B. völlig digital realisierten Ansteuerung.

Um die Schaltverluste - insbesondere bei hohen Eingangs- und Ausgangsspannungen - zu minimieren, kann beispielsweise so genanntes quasiresonantes Schalten bzw. so genanntes Valley-Switching der Schaltelemente des Tief-Hochsetzstellers angestrebt werden. Beim quasiresonanten Schalten wird beispielsweise mittels eines Erkennungskreises ein Minimum (auch "Valley" genannt) der Spannung an zumindest einem Schaltelement des Wandlers erkannt und das zumindest eine Schaltelement erst zu diesem Zeitpunkt eingeschaltet. Dadurch wird die Einschaltstromspitze minimiert, da die parasitäre Kapazität auf die Mindestspannung entladen ist, und es wird eine Reduktion der Schaltverluste und der Störabstrahlung erzielt. Das Einschalten während eines Valleys bewirkt ein laufendes Zurücksetzen des Periodenbeginns (Impuls-Reset) und somit ein Anpassen der Schaltfrequenz.

Wird beispielsweise immer während eines in einer Schaltperiode zeitlich als erstes auftretenden Valley eingeschaltet, so steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden. Um zu hohe Schaltfrequenzen bei wenig Last zu vermeiden, wird in der Regel der Einschaltzeitpunkt auf ein späteres Valley verlegt. Dabei kann es vorkommen, das bei bestimmten Leistungen zwischen den Valleys hin und her gesprungen werden muss, um die Ausgangsspannung konstant zu halten. Dieser Effekt wird auch "Valley-Skipping" genannt.

Aus der Schrift EP 2 538 532 A1 ist beispielsweise ein Ansteuerverfahren für einen DC-DC-Wandler bekannt, welcher im diskontinuierlichen Modus mit variabler Schaltfrequenz bzw. mit quasiresonantem Schalten betrieben wird. Um bei einer veränderlichen Last am Ausgang des Wandlers die Schaltelemente stets in einem Valley einschalten zu können, wird die Schaltfrequenz mit einer Nachlaufsynchronisationsschaltung nachgeführt. Kommt es z.B. zu einer sprunghaften Änderung der Ausgangsleistung oder einer raschen Änderung der Eingangsspannung, so werden bei diesem Ansteuerverfahren zumindest in einem Übergangsbereich die Schaltelemente nicht immer in einem Valley geschaltet, bis die Schaltfrequenz nachgeregelt wird. Dies kann z.B. bei einer ungünstigen Kombination aus sich ändernder Last und sich ändernder bzw. schwankender Eingangsspannung dazu führen, dass die Schaltelemente nie in einem Valley geschaltet werden, wenn z.B. die Nachregelung der Schaltfrequenz zu langsam erfolgt. Damit weist das in der Schrift EP 2 538 532 A1 beschriebene Ansteuerverfahren den Nachteil auf, dass es trotz einer Verwendung von "quasiresonantem Schalten" zu hohen Schaltverlusten und hohen Störaussendungen kommen kann.

### Darstellung der Erfindung

Der Erfindung liegt daher die Aufgabe zugrunde, ein Verfahren zur Ansteuerung eines getakteten Tief-Hochsetzers anzugeben, mit welchem auf einfache und kostengünstige Weise eine Verbesserung gegenüber dem Stand der Technik, insbesondere eine weitere Reduktion von Schaltverlusten und Störaussendungen bzw. EMV-Störungen vor allem bei hohen, rasch veränderlichen Eingangsspannungen und/oder rasch veränderlichen Lastverhältnissen am Ausgang erreicht wird.

Diese Aufgabe wird durch ein Verfahren gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Ansteuern eines Tief-Hochsetzstellers, welcher zumindest zwei Schaltelemente und eine Induktivität bzw. Drossel bzw. Spule ausweist, und durch welchen eine Eingangsspannung in eine geregelte Ausgangsspannung umgewandelt wird, welche z.B. größer, gleich oder kleiner als die Eingangsspannung sein kann. Dazu werden die zwei Schaltelemente mit jeweils einem pulsweiten- und frequenzmodulierten Steuersignal angesteuert. Dabei weisen die Steuersignale eine gemeinsame, variable Schaltfrequenz auf. Das jeweilige pulsweiten- und frequenzmodulierte Steuersignal zum Ansteuern eines jeweiligen Schaltelements wird aus einer Stellgröße abgeleitet, welche von einer Reglereinheit zur Regelung der Ausgangsspannung des Tief-Hochsetzstellers zur Verfügung gestellt wird. Für ein Einschalten der zwei Schaltelemente wird laufend ein Spannungsverlauf an den Schaltelementen ermittelt bzw. überwacht. Bei Erkennen eines Spannungsminimums des ermittelten Spannungsverlaufs an den Schaltelementen werden die beiden Schaltelemente (gleichzeitig) eingeschaltet und damit ein neuer Schaltzyklus gestartet, sofern eine vorgegebene minimale Periodendauer überschritten wurde. Wird im ermittelten Spannungsverlauf an den Schaltelementen bis zum Ablauf der vorgegebenen maximalen Periodendauer kein Spannungsminimum festgestellt, so werden die beiden Schaltelemente des Tief-Hochsetzstellers bei bzw. nach Ablauf einer vorgegebenen maximalen Periodendauer eingeschaltet. Dabei wird durch die vorgegebene minimale Periodendauer eine maximale Schaltfrequenz zum Takten der Schaltelemente definiert, welche nicht überschritten werden soll. Durch die vorgegebene maximale Periodendauer wird eine minimale Schaltfrequenz festgelegt, welche nicht unterschritten werden soll.

Der Hauptaspekt der erfindungsgemäß vorgeschlagenen Lösung besteht darin, dass durch eine entsprechende Ansteuerung der Schaltelemente des Tief-Hochsetzstellers sichergestellt wird, dass die gemeinsame, variable Schaltfrequenz der beiden Schaltelemente vorgegebene Grenzen nach oben und unten - d.h. eine vorgegebene maximale und minimale Schaltfrequenz - nicht über- bzw. unterschreitet. Das wird im Wesentlichen durch die Vorgabe einer minimalen und einer maximalen Periodendauer für einen gemeinsamen Schaltzyklus der beiden Schaltelemente erzielt. In jedem Schaltzyklus wird die abgelaufene Periodendauer überwacht und die beiden Schaltelemente zu einem möglichen optimalen Einschaltzeitpunkt - d.h. die vorgegebene minimale Periodendauer ist verstrichen und der Spannungsverlauf an den Schaltelementen weist ein Minimum (Valley) auf - gleichzeitig eingeschaltet und damit ein neuer Schaltzyklus ausgelöst.

Durch das erfindungsgemäße Ansteuerverfahren ist es möglich, die beiden Schaltelemente des Tief-Hochsetzstellers auch bei veränderlicher Ein- und Ausgangsspannung sowie bei veränderlicher Last, selbst bei einer sich sprungartig ändernden Ausgangsleistung bzw. einer schnell ändernden Eingangsspannung stets in einem Spannungsminimum (Valley) der an den beiden Schaltelementen anliegenden Spannung einzuschalten - sofern der an den Schaltelementen anliegende Spannungsverlauf vor Ablauf der vorgegebenen maximalen Periodendauer ein Minimum aufweist. Dadurch können auf einfache Weise relativ geringe Schaltverluste sowie eine geringe Störaussendung - speziell bei hohen Eingangs- bzw. Ausgangsspannungen (z.B. 100 zu bis 1000 Volt) erreicht und ein wesentlich höherer Wirkungsgrad sichergestellt werden.

Weiterhin kann mit dem erfindungsgemäßen Verfahren sehr einfach ein Tief-Hochsetzsteller, welcher im Leistungsteil beispielsweise nur zwei Schaltelemente (z.B. Transistoren, MOS-FETs, etc.) sowie zwei Dioden aufweist, mit geringen Schaltverlusten und geringer Störaussendung betrieben werden. Dadurch sind auch Ansteueraufwand sowie Kosten für eine schaltungstechnische Realisierung des erfindungsgemäßen Verfahrens mit geringeren Aufwendungen und Kosten verbunden. Weiterhin kann aufgrund geringerer Abwärme durch die aufgrund des erfindungsgemäßen Ansteuerverfahrens geringeren Schaltverluste ein Gerät bzw. das Schaltnetzteil kompakter gebaut werden.

Es ist weiterhin von Vorteil, wenn ein Abschaltzeitpunkt des jeweiligen Schaltelements durch die von der Reglereinheit zur Verfügung gestellten Stellgröße festgelegt wird, aus welcher das jeweilige pulsweiten- und frequenzmodulierte Steuersignal für das jeweilige Schaltelement abgeleitet wird. Das bedeutet, dass jedes der beiden Schaltelemente des Tief-Hochsetzstellers zum gleichen Zeitpunkt eingeschaltet wird, aber zu einem sich aus der Regelung der Ausgangsspannung ergebenden und durch das jeweilige Steuersignal für das jeweilige Schaltelement vorgegebenen Zeitpunkt ausgeschaltet wird. Dabei sind allerdings die Periodendauer sowie Schaltfrequenz, mit welcher die beiden Schaltelemente getaktet werden, ident.

Dabei ist es auch günstig, wenn zum Generieren des jeweiligen pulsweiten- und frequenzmodulierten Steuersignals zum Takten des jeweiligen Schaltelements aus der von der Reglereinheit zur Regelung der Ausgangsspannung zur Verfügung gestellten Stellgröße eine für das jeweilige Schaltelemente spezifische Stellgröße in Abhängigkeit von der jeweiligen Eingangsspannung und der jeweiligen Ausgangsspannung des Tief-Hochsetzstellers abgeleitet wird. Die jeweilige Schaltelement-spezifische Stellgröße kann dann für das jeweilige Steuersignal zum Ansteuern des jeweiligen Schaltelements herangezogen werden, wobei die Steuersignale idealerweise derart ausgestaltet sind, dass die Schaltelemente gleichzeitig eingeschaltet werden und individuell - z.B. entsprechende einem Betriebsmodus des Tief-Hochsetzstellers und/oder für eine Regelung der Ausgangsspannung auf einen vorgegebenen Wert bzw. in Abhängigkeit eines Verhältnisses der Eingangsspannung zur Ausgangsspannung - ausgeschaltet werden. Ein mögliches Verfahren für eine derartige Regelung eines Tief-Hochsetzstellers bzw. zum Ableiten entsprechender Stellgrößen wird beispielsweise in der bisher unveröffentlichten europäischen Patentanmeldung EP 20171701.4 beschrieben.

Weiterhin ist es vorteilhaft, wenn zum Generieren der pulsweiten- und frequenzmodulierten Steuersignale für die Schaltelemente ein Sägezahnsignal verwendet wird, welches von einer Oszillatoreinheit erzeugt wird. Idealerweise wird zu diesem Sägezahnsignal ein vorgebbarer Offset-Wert ergänzt. Durch eine Addition des Offset-Werts zum mit der Oszillatoreinheit erzeugten Signal wird beispielsweise sichergestellt, dass die pulsweiten- und frequenzmodulierten Steuersignale und damit die Schaltelemente von der Reglereinheit komplett ausgeschaltet werden können. Es wird dadurch verhindert, dass z.B. eventuell eine minimale Einschaltzeit übrig bleibt, wenn die Reglereinheit nicht korrekt auf eine Stellgröße von 0 Volt abregeln kann.

Eine bevorzugte Ausführungsform der Erfindung sieht vor, dass als Reglereinheit zur Regelung der Ausgangspannung des Tief-Hochsetzstellers ein Spannungsregler mit einer unterlagerten Stromregelung verwendet wird. Insbesondere kann als Reglereinheit eine so genannte Average Current Mode Control verwendet werden. Dabei gibt ein Spannungsregler auf Basis eines Ist- und Sollwertes z.B. der Ausgangsspannung des Tief-Hochsetzstellers einem untergeordneten Stromregler einen mittleren Stromsollwert beispielsweise für einen Mittelwert eines Stroms durch die Induktivität bzw. Drossel des Tief-Hochsetzstellers vor. Vom untergeordneten Stromregler wird dann der Strom z.B. durch die Drossel mittelbar oder unmittelbar erfasst und dann die Stellgröße erzeugt, welche zur Ableitung der pulsweiten- und frequenzmodulierten Steuersignale zum Schalten bzw. Takten der Schaltelemente des Tief-Hochsetzstellers bzw. zum Ermitteln der Abschaltzeitpunkte der einzelnen Schaltelemente verwendet wird.

Weiterhin kann in vorteilhafter Weise für eine Ermittlung bzw. Überwachung des Spannungsverlaufs an den Schaltelementen und zum Erkennen eines Spannungsminimums bzw. Valleys im Spannungsverlauf eine Spannungsmessung an zumindest einem der Schaltelemente des Tief-Hochsetzstellers durchgeführt werden. Eine Einheit zum Erkennen von Spannungsminima bzw. von Valleys kann dabei idealerweise derart aufgebaut werden, dass die Spannungsverläufe lediglich an einem der beiden Schaltelementen überwacht werden, da die Spannungsminima bzw. Valleys stets zeitgleich an beiden Schaltelementen auftreten. Wird ein Minimum im Spannungsverlauf an einem der Schaltelementen erkannt, so kann beispielsweise ein Impuls ausgegeben werden, welcher durch das Ansteuerverfahren genutzt wird.

Da zeitgleich mit einem Minimum im Spannungsverlauf an den Schaltelementen ein positiver Nulldurchgang des Stromes in der Induktivität bzw. Drossel erreicht wird, kann alternativ oder zusätzlich zum Erkennen eines Minimums bzw. eines Valleys im Spannungsverlauf an den Schaltelementen ein Stromverlauf durch die Induktivität bzw. Drossel des Tief-Hochsetzstellers herangezogen und ausgewertet werden. Dazu kann z.B. der Stromverlauf durch die Induktivität des Tief-Hochsetzstellers mit Hilfe eines Strommesswiderstands erfasst werden. Wird ein positiver Nulldurchgang im erfassten Stromverlauf festgestellt, so kann beispielsweise ein Impuls generiert werden, welcher durch das Ansteuerverfahren verwendet wird.

Alternativ oder zusätzlich kann auch der Spannungsverlauf an einer Hilfswicklung der Induktivität bzw. Drossel des Tief-Hochsetzstellers herangezogen und ausgewertet werden. Positive Nulldurchgänge einer Spannung an einer Hilfswicklung der Induktivität bzw. Drossel des Tief-Hochsetzstellers treten zeitgleich mit waagerechter Steigung im Stromverlauf durch die Induktivität bzw. Drossel des Tief-Hochsetzstellers auf und dies geschieht exakt 90° - bezogen auf eine Valley-Schwingperiode - vor einem Minimum im Spannungsverlauf an den Schaltelementen bzw. einem positiven Nulldurchgang des Stromes in der Induktivität bzw. Drossel. Wird ein positiver Nulldurchgang im erfassten Spannungsverlauf einer Hilfswicklung der Induktivität bzw. Drossel des Tief-Hochsetzstellers festgestellt, so kann nach Ablauf einer konstanten Verzögerung - mit der Zeitdauer entsprechend 90° einer Valley-Schwingperiode - ein Impuls generiert werden, welcher durch das Ansteuerverfahren verwendet wird.

Weiterhin ist es günstig, wenn die vorgegebene minimale Periodendauer, durch welche eine maximale Schaltfrequenz für die Schaltelemente festgelegt wird, anhand eines vorgebbaren Wirkungsgrads des Tief-Hochsetzstellers oder anhand von vorgegebenen maximalen Störaussendungen in einem bestimmten Frequenzbereich bestimmt werden kann. Durch die Vorgabe der minimalen Periodendauer bzw. der maximalen Schaltfrequenz können sehr einfach zu hohe Schaltverluste und eventuell zu hohe Störaussendungen verhindert werden und damit ein vorgebbarer Wirkungsgrad bzw. vorgebbare maximale Störaussendungen in einem bestimmten Frequenzbereich erzielt werden.

Zweckmäßigerweise kann auch die vorgegebene maximale Periodendauer, durch welche eine minimale Schaltfrequenz für die Schaltelemente festgelegt wird, aus einer Dynamik der Reglereinheit ermittelt werden. Durch die Vorgabe einer maximalen Periodendauer bzw. einer minimalen Schaltfrequenz wird insbesondere bei steigender Ausgangsleistung verhindert, dass es zu Instabilitäten der Reglereinheit bzw. im Regelkreis kommt. Insbesondere wenn z.B. die variable Schaltfrequenz einer so genannten Durchtrittsfrequenz des Regelkreises zu nahe kommt, können Instabilitäten auftreten. Vor allem beim Betrieb des Tief-Hochsetzstellers bei sehr hoher Ausgangsleistung kann durch entsprechende Vorgabe der maximalen Periodendauer ein zu weites Absinken der Schaltfrequenz beim Einschalten der Schaltelemente in einem Spannungsminimum (d.h. bei quasiresonantem Schalten) verhindert werden. Damit kann ein Regelkreis dimensioniert werden, mit welchem dynamische Vorgänge (z.B. Änderungen der Eingangsspannung, Änderungen der Last, etc.) rasch ausgeregelt werden können.

Idealerweise wird der Tief-Hochsetzsteller in Abhängigkeit von der Eingangsspannung und der Ausgangsspannung in einem Tiefsetzer-Modus und/oder in einem Mischbetrieb betrieben. Damit kann bei veränderlichen Eingangs- und Ausgangsspannungen sowie veränderlichen Lastverhältnissen am Tief-Hochsetzsteller die Eingangsspannung sehr einfach in eine geregelte, vorgegebene Ausgangsspannung umgewandelt werden, welche größer, gleich oder kleiner der Eingangsspannung ist. Dabei wird im Tiefsetzer-Modus nur ein erstes Schaltelement der zwei Schaltelemente als Tiefsetzer-Schaltelement getaktet. Ein zweites Schaltelement, welches als Hochsetzer-Schaltelement fungiert, bleibt im Tiefsetzer-Modus ausgeschaltet. Im Mischbetrieb werden beide Schaltelemente getaktet, wobei das erste Schaltelement weiterhin als Tiefsetzer-Schaltelement eingesetzt wird und ein zweites Schaltelement der beiden Schaltelemente als Hochsetzer-Schaltelement verwendet wird.

Weiterhin ist es günstig, wenn der Tief-Hochsetzsteller in einem kontinuierlichen Betrieb und in einem diskontinuierlichen Betrieb betrieben wird. Der Tief-Hochsetzsteller wird dann durch das erfindungsgemäße Ansteuerverfahren insbesondere im diskontinuierlichen Betrieb zu einem optimalen Zeitpunkt geschaltet - d.h. die beiden Schaltelemente werden zum optimalen Einschaltzeitpunkt eingeschaltet, wobei dieser innerhalb einer Zeitspanne liegt, welche durch die minimale und die maximale Periodendauer vorgegeben wird.

### Kurzbeschreibung der Zeichnung

Die Erfindung wird nachfolgend in beispielhafter Weise anhand der beigefügten Figuren erläutert. Es zeigen dabei in schematischer Darstellung:
Figur 1 ein beispielhaftes System zur Durchführung des erfindungsgemäßen Verfahrens zur Ansteuerung eines Gleichspannungswandlers, insbesondere Tief-Hochsetzstellers
Figur 2 einen beispielhaften Ablauf des erfindungsgemäßen Verfahrens zur Ansteuerung eines Tief-Hochsetzstellers
Figur 3a beispielhafte Spannungs- und Signalverläufe zur Ansteuerung von Schaltelementen eines Tief-Hochsetzstellers bei einer anlogen Ansteuerungsrealisierung
Figur 3b beispielhafte Spannungs- und Signalverläufe zur Ansteuerung von Schaltelementen eines Tief-Hochsetzstellers bei einer digitalen Ansteuerungsrealisierung

### Ausführung der Erfindung

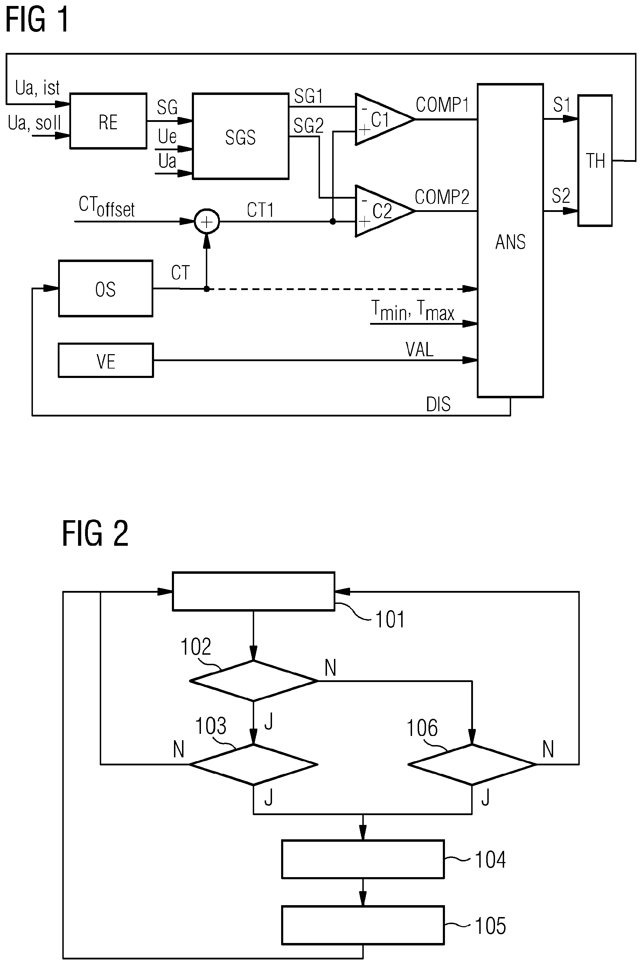

Figur 1 zeigt schematisch und beispielhaft ein System zur Durchführung des erfindungsgemäßen Verfahrens zur Ansteuerung eines Tief-Hochsetzstellers TH. Ein Tief-Hochsetzsteller oder Buck-Boost-Konverter TH kann eine Eingangsspannung Ue in eine geregelte Ausgangsspannung Ua umwandeln, welche größer, gleich oder kleiner als die Eingangsspannung Ue ist. Dazu kann der Tief-Hochsetzsteller in Abhängigkeit von einem Verhältnis zwischen Eingangsspannung Ue und Ausgangsspannung Ua in unterschiedlichen Modi, wie beispielsweise in einem Tiefsetzer-Modus und/oder einem Mischbetrieb betrieben werden.

Der Tief-Hochsetzsteller TH umfasst dazu beispielsweise einen Tiefsetzsteller, welchem ein Hochsetzsteller nachgeschaltet wird. Dabei weist eine Schaltungsanordnung für einen Tief-Hochsetzsteller TH z.B. eine Induktivität bzw. Drossel auf, welche sowohl vom Tiefsetzerteil als auch vom Hochsetzerteil des Tief-Hochsetzstellers TH als Energiespeicher genutzt wird. Weiterhin weist der Tief-Hochsetzsteller TH im Leistungsteil z.B. zwei Schaltelemente und zwei Dioden auf, wobei im Tiefsetzerteil ein erstes Schaltelement als Tiefsetzer-Schaltelement sowie eine Diode und im Hochsetzerteil ein zweites Schaltelement als Hochsetzer-Schaltelement sowie eine Diode eingesetzt werden.

Die beiden Schaltelemente des Tief-Hochsetzstellers TH werden durch pulsweiten- und frequenzmodulierte Steuersignale Sl, S2 mit einer gemeinsamen, variablen Schaltfrequenz angesteuert.

Dabei wird für eine Ansteuerung des ersten Schaltelements bzw. des Tiefsetzer-Schaltelements ein erstes Steuersignal S1 und für eine Ansteuerung des zweiten Schaltelements bzw. des Hochsetzer-Schaltelements ein zweites Steuersignal S2 verwendet. Für eine Ableitung der pulsweiten- und frequenzmodulierten Steuersignale Sl, S2 wird ein Regelkreis zur Regelung der Ausgangsspannung Ua,ist auf einen vorgebbaren Sollwert Ua,soll eingesetzt, wobei als Regelmethode z.B. die so genannten Average Current Mode Control verwendet wird. Dazu wird eine Reglereinheit RE eingesetzt, welche z.B. als Spannungsregler mit einer unterlagerten Stromregelung ausgestaltet ist. Dabei wird einem untergeordneten Stromregler von einem Spannungsregler z.B. auf Basis eines vorgebbaren Sollwerts Ua,soll und einer aktuellen Ausgangsspannung Ua,ist des Tief-Hochsetzstellers TH ein mittlerer Stromsollwert - beispielsweise für einen Mittelwert eines Stroms durch die Drossel des Tief-Hochsetzstellers - vorgegeben. Vom untergeordneten Stromregler wird dann der Strom z.B. durch die Drossel mittelbar oder unmittelbar erfasst und dann eine Stellgröße SG erzeugt, welche zur Ableitung der pulsweiten- und frequenzmodulierten Steuersignale Sl, S2 zum Schalten bzw. Takten der Schaltelemente des Tief-Hochsetzstellers TH herangezogen wird.

Über eine Einheit zur Stellgrößensteuerung SGS können dann in Abhängigkeit von der Eingangsspannung Ue und der Ausgangsspannung Ua für jedes Schaltelement des Tief-Hochstellers eigene Stellgrößen SG1, SG2 abgeleitet werden. Dabei kann z.B. eine erste Stellgröße SG1 für das erste Schaltelement bzw. für eine Ableitung des ersten Steuersignals S1 und eine zweite Stellgröße SG2 für das zweite Schaltelement bzw. für eine Ableitung des zweiten Steuersignals S2 aus der von der Reglereinheit RE zur Verfügung gestellten Stellgröße SG ermittelt werden. Ein mögliches Verfahren zum Ableiten dieser entsprechenden Stellgrößen SG1, SG2 wird beispielsweise in der bisher unveröffentlichten europäischen Patentanmeldung EP 20171701.4 beschrieben.

Von der durch die von der Reglereinheit RE zur Verfügung gestellte Stellgröße SG bzw. von den daraus abgeleiteten Stellgrößen SG1, SG2 wird dann z.B. ein Abschaltzeitpunkt des jeweiligen Schaltelements des Tief-Hochsetzstellers TH festgelegt. So kann z.B. die erste Stellgröße SG1 einen Abschaltzeitpunkt für das erste Schaltelement bzw. das Tiefsetzer-Schaltelement und die zweite Stellgröße SG2 einen Abschaltzeitpunkt für das zweite Schaltelement bzw. das Hochsetzer-Schaltelement vorgeben.

Zum Ableiten der beiden pulsweiten- und frequenzmodulierten Steuersignale Sl, S2, insbesondere der unterschiedlichen Abschaltzeitpunkte der beiden Schaltelemente, aus den beiden Stellgrößen SG1, SG2 werden die unterschiedlichen Stellgrößen SG1, SG2 beispielsweise mit Hilfe von Komparatoreinheiten Cl, C2 mit einem Sägezahnsignal CT1 verglichen. Für dieses Sägezahnsignal CT1 wird beispielsweise zu einem Sägezahnsignal CT, welches von einer Oszillatoreinheit OS (z.B. Sägezahngenerator) generiert wird, ein Offset-Wert CToffset addiert. Die beiden Komparatoreinheiten Cl, C2 liefern zwei Komparator-Signal-informationen COMP1, COMP2, welche von einer Ansteuerung ANS zum Ableiten der pulsweiten- und frequenzmodulierten Steuersignale Sl, S2, vor allem für die Abschaltzeitpunkte der Schaltelemente, herangezogen werden.

Um die gemeinsame Schaltfrequenz verändern zu können bzw. den Einschaltzeitpunkt der beiden Schaltelemente für die Steuersignale Sl, S2 ermitteln zu können, werden der Ansteuerung ANS ein minimale Periodendauer Tmin und eine maximale Periodendauer Tmax vorgegeben. Dabei definiert die minimale Periodendauer Tmin eine maximale Schaltfrequenz, mit welcher die Schaltelemente getaktet werden sollen. Die minimale Periodendauer Tmin kann beispielsweise auf Basis eines vorgebbaren Wirkungsgrads des Tief-Hochsetzstellers bzw. vorgebbarer maximaler Störaussendungen in einem bestimmten Frequenzbereich gewählt werden, um zu hohe Schaltverluste und eventuell zu hohe Störaussendungen zu verhindern. Die maximale Periodendauer Tmax legt eine minimale Schaltfrequenz zum Takten der Schaltelemente fest und kann aus einer Dynamik des Regelkreises bzw. der Reglereinheit RE bestimmt werden, um z.B. Instabilitäten der Reglereinheit RE bzw. im Regelkreis zu verhindern, welche vor allem dann auftreten können, wenn die variable Schaltfrequenz einer so genannten Durchtrittsfrequenz des Regelkreises zu nahe kommt.

Weiterhin wird der Ansteuerung ANS z.B. ein Erkennungssignal VAL zum Erkennen von Spannungsminima eines Spannungsverlaufs an den Schaltelementen des Tief-Hochsetzstellers TH zugeführt. Das Erkennungssignal VAL kann beispielsweise von einer Einheit zum Überwachen des Spannungsverlaufs an den Schaltelementen des Tief-Hochsetzstellers TH und zum Erkennen von Spannungsminima bzw. Valleys in diesem Spannungsverlauf - einer Valley-Erkennungseinheit VE - erzeugt werden. Dazu kann z.B. eine Spannungsmessung an den ausgeschalteten Schaltelementen des Tief-Hochsetzstellers TH durchgeführt werden. Wird durch die Spannungsmessung im Spannungsverlauf an den ausgeschalteten Schaltelementen ein Spannungsminimum bzw. Valley festgestellt, so kann z.B. von der Valley-Erkennung VE ein Impuls generiert werden.

Alternativ oder zusätzlich kann auch ein Stromverlauf durch die Induktivität bzw. Drossel des Tief-Hochsetzstellers TH überwacht werden und daraus die Spannungsminima bzw. Valleys im Spannungsverlauf an den Schaltelementen abgeleitet werden. Da ein Spannungsminimum bzw. Valley mit einem positiven Nulldurchgang des Stroms durch die Induktivität erreicht wird, kann von der Valley-Erkennung VE z.B. bei jedem positiven Nulldurchgang des Stroms durch die Induktivität ein Impuls generiert werden. Die Impulse werden dann als Erkennungssignal VAL an die Ansteuerung ANS weitergeleitet.

Weiterhin besteht auch die Möglichkeit, dass alternativ oder zusätzlich positive Nulldurchgänge einer Spannung an einer Hilfswicklung der Induktivität bzw. Drossel des Tief-Hochsetzstellers TH ausgewertet werden, welche Zeitpunkte mit waagerechter Steigung im Stromverlauf durch die Induktivität bzw. Drossel des Tief-Hochsetzstellers TH signalisieren, welche jeweils 90° - bezogen auf eine Valley-Schwingperiode - vor einem Spannungsminimum bzw. Valley auftreten. Die Valley-Erkennung VE muss in diesem Fall zwischen einem erkannten positiven Nulldurchgang der Spannung an einer Hilfswicklung und dem Erzeugen eines Impulses am Erkennungssignal VAL eine konstante Verzögerung mit der Dauer von 90° einer Valley-Schwingperiode einfügen.

Gegebenenfalls wird der Ansteuerung ANS - vor allem bei einer analogen Realisierung der Ansteuerung ANS - z.B. auch das von der Oszillatoreinheit OS generierte Sägezahnsignal CT zur Verfügung gestellt, um daraus die Begrenzungen der variablen Schaltfrequenz - d.h. maximale und minimale Schaltfrequenz - festzulegen. Bei digitalen Realisierungsvarianten der Ansteuerung ANS können diese Begrenzungen beispielsweise mittels Zählereinheiten realisiert werden.

Weiterhin kann von der Ansteuerung ANS ein Setzsignal DIS generiert werden, durch welches zum Einschaltzeitpunkt der Schaltelemente die Oszillatoreinheit OS zurückgesetzt wird. D.h. das Sägezahnsignal CT der Oszillatoreinheit wird auf Null gesetzt und ein neuer Sägezahn CT bzw. ein neuer Schaltzyklus gestartet.

Ein Ein- und Ausschalten der beiden Schaltelemente des Tief-Hochsetzstellers TH, welches durch die Steuersignale Sl, S2 ausgelöst wird, wird z.B. von der Ansteuerung ANS entsprechend dem erfindungsgemäßen Verfahren durchgeführt. Ein beispielhafter Ablauf des erfindungsgemäßen Verfahrens zur Ansteuerung eines Tief-Hochsetzstellers TH ist in Figur 2 schematisch dargestellt. Dieser Ablauf kann beispielsweise mit dem in Figur 1 dargestellten System, insbesondere durch die Ansteuerung ANS, durchgeführt werden.

Zum Bestimmen des gemeinsamen Einschaltzeitpunkts der beiden Schaltelemente des Tief-Hochsetzstellers TH wird in einem Überwachungsschritt 101 beispielsweise von der Valley-Erkennung VE der Spannungsverlauf an den beiden Schaltelementen des Tief-Hochsetzstellers TH laufend ermittelt und überwacht. Dazu kann z.B. eine Spannungsmessung an den Schaltelementen durchgeführt werden oder der Verlauf des Stroms durch die Induktivität bzw. Drossel des Tief-Hochsetzstellers TH überwacht werden oder der Spannungsverlauf an einer Hilfswicklung der Induktivität bzw. Drossel des Tief-Hochsetzstellers gemessen werden. Die beiden Schaltelemente sind dabei ausgeschaltet.

Wird z.B. von der Valley-Erkennung VE in einem Erkennungsschritt 102 ein Spannungsminimum im Spannungsverlauf an den Schaltelementen (z.B. durch Spannungsmessung oder anhand eines positiven Nulldurchgangs des Stroms durch die Drossel) erkannt, so kann beispielsweise ein Impuls für das Erkennungssignal VAL erzeugt und an die Ansteuerung ANS weitergeleitet werden.

Wird ein Spannungsminimum bzw. Valley erkannt, so wird in einem ersten Prüfschritt 103 geprüft, ob die minimale Periodendauer Tmin erreicht bzw. überschritten ist. Dazu kann z.B. die Ansteuerung ANS bei Erhalt eines Impulses des Erkennungssignals VAL prüfen, ob die minimale Periodendauer Tmin erreicht ist. Ist die minimale Periodendauer Tmin noch nicht erreicht, so wird im Überwachungsschritt 101 von der Valley-Erkennung VE der Spannungsverlauf an den beiden Schaltelementen des Tief-Hochsetzstellers TH ermittelt und im Erkennungsschritt 102 auf das Erkennen eines weiteren Spannungsminimums bzw. Valleys im Spannungsverlauf an den Schaltelementen geprüft. Beim Erkennen eines weiteren Spannungsminimum wird wieder im ersten Prüfschritt 103 das Erreichen der minimalen Periodendauer Tmin geprüft.

Wird im ersten Prüfschritt 103 bei Erkennen eines Valleys festgestellt, dass die minimale Periodendauer erreicht oder überschritten ist, so werden in einem Einschaltschritt 104 die beiden Schaltelemente des Tief-Hochsetzstellers TH eingeschaltet. Dazu können z.B. die beiden Steuersignale Sl, S2 von der Ansteuerung ANS gesetzt und gleichzeitig das Setzsignal DIS für die Oszillatoreinheit OS generiert werden, um die Oszillatoreinheit OS bzw. das Sägezahnsignal CT zurückzusetzen. Mit dem Einschaltschritt 104 bzw. dem Einschalten der beiden Schaltelemente des Tief-Hochsetzstellers TH wird ein neuer Schaltzyklus gestartet und die Schaltfrequenz zum Takten der Schaltelemente variiert.

In einem Ausschaltschritt 105 werden dann die beiden Schaltelemente entsprechend der gewünschten Einschaltzeiten ausgeschaltet. Der Ausschaltzeitpunkt des jeweiligen Schaltelements des Tief-Hochsetzstellers wird beispielsweise durch die jeweilige Stellgröße SG1, SG2 vorgegeben, welche aus der von der Reglereinheit RE zur Regelung der Ausgangsspannung Ua zur Verfügung gestellten Stellgröße SG abgeleitet wurden. Auf Basis der jeweiligen Stellgrößen SG1, SG2 wird für das jeweilige Schaltelemente beispielsweise mittels Komparator-Einheiten Cl, C2 eine jeweilige Komparator-Signalinformation COMP1, COMP2 erstellt. Anhand dieser Komparator-Signalinformation COMP1, COMP2 wird dann z.B. von der Ansteuerung ANS das jeweilige Steuersignal Sl, S2 rückgesetzt, um das zugehörige Schaltelement auszuschalten. Dabei wird bei einem Tief-Hochsetzsteller TH, welcher im Mischbetrieb betrieben wird, üblicherweise zuerst das Hochsetzer-Schaltelement und dann das Tiefsetzer-Schaltelement ausgeschaltet. In einem Tiefsetzer-Modus des Tief-Hochsetzstellers TH wird nur das Tiefsetzer-Schaltelemente bzw. das erste Schaltelement getaktet, während das Hochsetzer-Schaltelement bzw. das zweite Schaltelement ausgeschaltet bleibt.

Wird z.B. von der Valley-Erkennung VE im Erkennungsschritt 102 kein Spannungsminimum im Spannungsverlauf an den Schaltelementen (z.B. durch Spannungsmessung oder anhand eines positiven Nulldurchgangs des Stroms durch die Drossel) erkannt, so wird in einem zweiten Prüfschritt 106, welcher z.B. insbesondere nach Erreichen der minimalen Periodendauer Tmin beispielsweise von der Ansteuerung ANS durchgeführt werden kann, geprüft, ob die maximale Periodendauer Tmax abgelaufen ist.

Solange die maximale Periodendauer Tmax noch nicht erreicht worden ist, wird weiterhin im Überwachungsschritt 101 von der Valley-Erkennung VE der Spannungsverlauf an den beiden Schaltelementen des Tief-Hochsetzstellers TH ermittelt und im Erkennungsschritt 102 auf das Erkennen eines weiteren Spannungsminimums bzw. Valleys im Spannungsverlauf an den Schaltelementen geprüft. Wurde bis zum Ablauf der maximalen Periodendauer Tmax kein Spannungsminimum bzw. Valley erkannt, so wird der Einschaltschritt 104 durchgeführt. D.h. die Schaltelemente werden - auch ohne erkannten Spannungsminimum im Spannungsverlauf an den Schaltelementen - "hart" eingeschaltet, um eine minimale Schaltfrequenz nicht zu unterschreiten und einen neuen Schaltzyklus zu starten. Weiterhin wird auch das Setzsignal DIS für die Oszillatoreinheit OS zum Rücksetzen des Sägezahnsignals CT erzeugt und an die Oszillatoreinheit gesendet. Danach werden die Schaltelemente des Tief-Hochsetzstellers TH wieder gemäß dem Ausschaltschritt 105 zu den jeweiligen Ausschaltzeitpunkten ausgeschaltet.

Sind nach dem Ausschaltschritt 105 beide Schaltelemente des Tief-Hochsetzstellers ausgeschaltet, kann das Verfahren wieder mit dem Überwachungsschritt 101 begonnen werden, um den nächsten optimalen Einschaltzeitpunkt - d.h. Einschalten der beiden Schaltelemente bei einem Spannungsminimum bzw. Valley - für die Steuersignale Sl, S2 zu bestimmen und den nächsten Schaltzyklus zu starten.

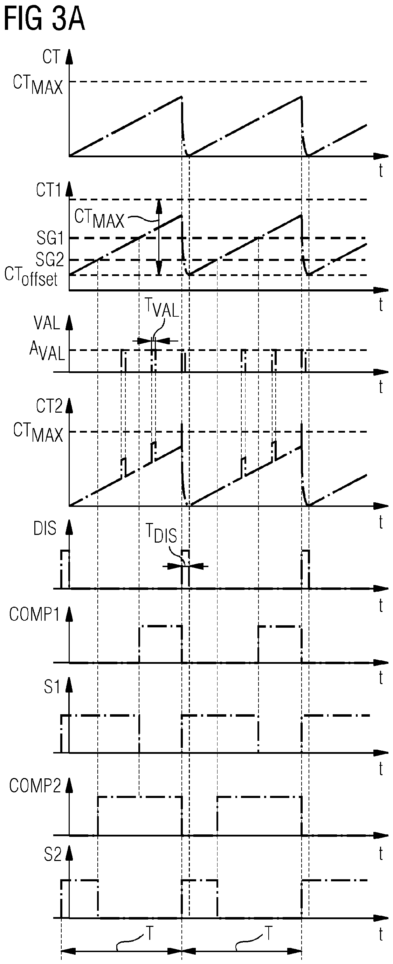

Eine Realisierung des erfindungsgemäßen Verfahrens bzw. der Ansteuerung ANS für das Ansteuern der Schaltelemente bzw. Erzeugen der Steuersignale Sl, S2 kann anlog z.B. beispielsweise mit Hilfe von Komparatoren und Rücksetz-Setz- bzw. RS-Flipflops erfolgen. Entsprechende Spannungs- und Signalverläufe für diese analoge Realisierungsvariante sind beispielhaft in der Figur 3a dargestellt.

Figur 3a zeigt dabei in einem Signalverlauf CT einen zeitlichen Verlauf des Sägezahnsignals CT, welche von der Oszillatoreinheit OS generiert wird. Im ersten Signalverlauf ist ein Maximalwert CTmax für das Sägezahnsignal CT eingetragen, durch welchen die maximale Periodendauer Tmax vorgegeben wird.

Aus dem Sägezahnsignal CT wird durch Addition eines Offset-Wertes CToffset das verschobene Sägezahnsignal CT1 abgeleitet, welches in einem Signalverlauf CT1 beispielhaft dargestellt ist. Das verschobene Sägezahnsignal CT1 wird mit den im zweiten Signalverlauf eingetragenen Stellgrößen SG1, SG2 z.B. durch die Komparatoreinheiten Cl, C2 verglichen. Die erste Stellgröße SG1 ist dem ersten Schaltelement bzw. dem Tiefsetzer-Schaltelemente zugeordnet. Die zweite Stellgröße SG2 ist dem zweiten Schaltelement bzw. dem Hochsetzer-Schaltelemente zugeordnet. Aus einem Vergleich des verschobenen Sägezahnsignals CT1 mit den beiden Stellgrößen SG1, SG2 werden die jeweiligen Abschaltzeitpunkte der beiden Schaltelemente abgeleitet.

Der Vergleich des verschobene Sägezahnsignals CT1 mit der ersten Stellgröße SG1 z.B. durch eine Komparatoreinheit C1 liefert eine erste Komparator-Signalinformation COMP1, welche im Signalverlauf COMP1 dargestellt ist und aus welcher mittels der Ansteuerung ANS der Abschaltzeitpunkt des ersten Schaltelements bzw. des Tiefsetzer-Schaltelements für das erste pulsweiten- und frequenzmodulierte Steuersignal S1 bestimmt wird. Ein beispielhafter Verlauf des ersten Steuersignals S1 für das Tiefsetzer-Schaltelement ist dabei als Signalverlauf S1 dargestellt. Überschreitet das verschobene Sägezahnsignal CT1 die erste Stellgröße SG1, so wird beispielsweise mittels einer Komparatoreinheit C1 die erste Komparator-Signalinformation COMP1 gesetzt und das erste Steuersignal S1 zurückgesetzt, wodurch das Tiefsetzer-Schaltelement ausgeschaltet wird.

Analog liefert der Vergleich des verschobenen Sägezahnsignals CT1 mit der zweiten Stellgröße SG2 z.B. mittels der Komparatoreinheit C2 den Abschaltzeitpunkt für das zweite Schaltelement bzw. das Hochsetzer-Schaltelement. Dazu wird aus dem Vergleich eine zweite Komparator-Signalinformation COMP2 ermittelt, welche im Signalverlauf COMP2 dargestellt ist. Aus der zweiten Komparator-Signalinformation COMP2 wird dann von der Ansteuerung ANS der Abschaltzeitpunkt des Hochsetzer-Schaltelements für das zweite pulsweiten- und frequenzmodulierte Steuersignal S2 - dargestellt im Signalverlauf S2 - ermittelt. Überschreitet das verschobene Sägezahnsignal CT1 die zweite Stellgröße SG2, so wird z.B. mittels einer Komparatoreinheit C2 die zweite Komparator-Signalinformation COMP2 gesetzt und das zweite Steuersignal S2 zurückgesetzt, wodurch das Hochsetzer-Schaltelement ausgeschaltet wird. Ist beispielsweise die zweite Stellgröße SG2 kleiner als der Offset-Wert CToffset, dann wird das Hochsetzer-Schaltelement nicht getaktet, sondern bleibt ausgeschaltet - d.h. der Tief-Hochsetzsteller TH arbeitet im Tiefsetzer-Modus.

In einem Signalverlauf VAL ist das Erkennungssignal VAL beispielhaft dargestellt, welche von der Valley-Erkennung VE generiert wird. Jeder Impuls des dargestellten Signalverlaufs VAL entspricht dabei einem erkannten Spannungsminimum bzw. Valley im Spannungsverlauf an den Schaltelementen des Tief-Hochsetzstellers TH. Die Impulse weisen beispielsweise eine definierte Amplitude A_{VAL} und eine definierte Impulsbreite T_{VAL} auf. Dabei kann die Amplitude A_{VAL} z.B. derart definiert werden, dass aus einem Verhältnis der Amplitude A_{VAL} zum Maximalwert CTmax die maximale Schaltfrequenz und damit die minimale Periodendauer Tmin ermittelbar ist. D.h. die maximale Schaltfrequenz, welche durch die vorgegebene minimale Periodendauer Tmin bestimmt wird, kann durch entsprechende Definition der Amplitude A_{VAL} der Impulse des Erkennungssignals VAL vorgegeben werden.

Das Erkennungssignal VAL wird z.B. von der Ansteuerung ANS ausgewertet. Dazu wird beispielweise ein Summensignal CT2 - dargestellt im Signalverlauf CT2 - aus dem Sägezahnsignal CT und dem Erkennungssignal VAL gebildet. Dieses Summensignal CT2 wird dann z.B. mittels einer Komparatoreinheit von der Ansteuerung ANS mit dem Maximalwert CTmax verglichen. Bei Überschreiten des Maximalwerts CTmax durch das Summensignal CT2 wird ein Setzsignal DIS ausgelöst, welches eine Breite T_{DIS} aufweist und in einem Signalverlauf DIS dargestellt ist.

Weiterhin wird durch das Setzsignal DIS die Oszillatoreinheit OS bzw. das Sägezahnsignal CT der Oszillatoreinheit OS zurückgesetzt. Dadurch kippen auch die beiden Komparator-Signalinformationen COMP1, COMP2 wieder zurück und es werden beispielsweise über RS-Flipflops die Steuersignale Sl, S2 der Schaltelemente des Tief-Hochsetzstellers gesetzt und damit ein neuer Schaltzyklus gestartet. D.h. die beiden Schaltelemente werden gleichzeitig eingeschaltet.

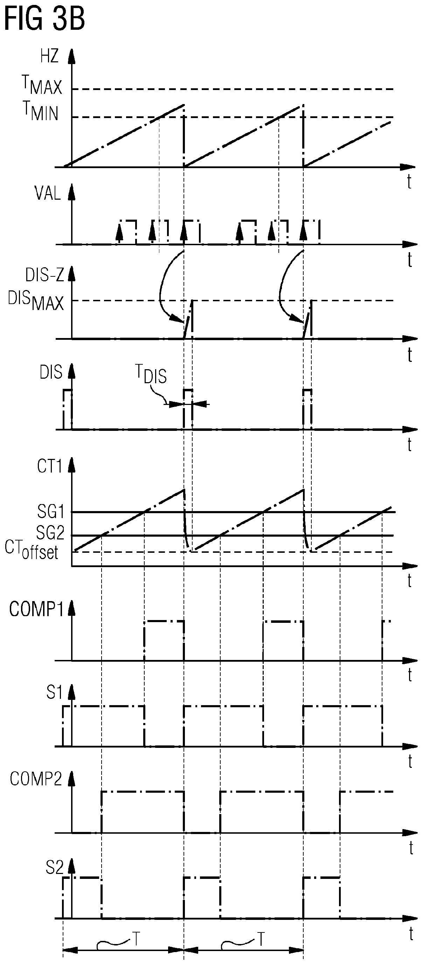

Alternativ kann das erfindungsgemäße Ansteuerverfahren, insbesondere die Ansteuerung ANS, auch digital umgesetzt werden. Dazu können z.B. ein Mikrokontroller, ein Programmable Logic Device (PLC) oder andere digitale Bauelemente verwendet werden. In Figur 3b sind Spannungs- und Signalverläufe für eine digitale Realisierungsvariante z.B. mittels eines Programmable Logic Devices (PLD) beispielhaft dargestellt.

Bei einer digitalen Realisierung der Ansteuerung ANS kann die Begrenzung der Schaltfrequenz bzw. die Überprüfung der vorgegebenen minimalen und maximalen Periodendauer beispielsweise mittels einer Zählereinheit HZ realisiert werden. Weiterhin kann für die Realisierung der definierten Breite des Setzsignals DIS ebenfalls eine Zählereinheit DIS-Z verwendet werden. In Figur 3b sind die graphischen Darstellungen der Zählereinheiten HZ, DIS-Z in den Verläufen HZ, DIS-Z beispielhaft dargestellt.

Der Verlauf HZ zeigt beispielhaft eine graphische Darstellung der Zählereinheit HZ, welche bei einem vorgegebenen Maximalwert Tmax fix überläuft. Dieser Maximalwert entspricht der vorgegebenen maximalen Periodendauer Tmax, wodurch die minimale Schaltfrequenz festgelegt werden kann. Weiterhin ist im Verlauf HZ die minimale Periodendauer Tmin eingetragen, welche die maximale Schaltfrequenz festlegt und nicht unterschritten werden soll.

Im Signalverlauf VAL ist wieder ein beispielhafter Verlauf des Erkennungssignals VAL dargestellt, welcher von der Valley-Erkennung VE erzeugt wird. Die positiven Flanken der Impulse des Signalverlaufs VAL geben wieder erkannte Spannungsminima bzw. Valleys im Spannungsverlauf an den Schaltelementen des Tief-Hochsetzstellers TH an. Fällt eine steigende Flanke eines Impulses des Erkennungssignals VAL in einen Bereich des Zählerverlaufs HZ zwischen den Grenzen Tmin und Tmax, so wird die Zählereinheit HZ zurückgesetzt und das Setzsignal DIS - dargestellt im Signalverlauf DIS - erzeugt sowie die Zählereinheit DIS-Z - graphisch dargestellt im Verlauf DIS-Z - getriggert. Die Zählereinheit DIS-Z weist z.B. einen Überlaufswert DIS_{MAX} auf, durch welchen die Impulsbreite T_{DIS} festgelegt wird.

Weiterhin wird durch das Setzsignal DIS die Oszillatoreinheit OS bzw. das Sägezahnsignal CT der Oszillatoreinheit OS zurückgesetzt, wodurch auch die beiden Komparator-Signalinformationen COMP1, COMP2 wieder zurück kippen. Damit werden die beiden pulsweiten- und frequenzmodulierten Steuersignale Sl, S2 gesetzt. Diese sind in den entsprechenden Signalverläufen Sl, S2, COMP1, COMP2 dargestellt. Durch das Setzen der Steuersignale Sl, S2 werden die beiden Schaltelemente des Tief-Hochsetzstellers TH eingeschaltet und ein neuer Schaltzyklus gestartet.

Weiterhin ist in Figur 3b wieder der Signalverlauf CT1 des verschobenen Sägezahnsignal CT1 dargestellt, welches aus dem Sägezahlsignal CT der Oszillatoreinheit OC verschoben um den Offset-Wert CToffset erzeugt wird. Aus dem Sägezahnsignal CT1 werden - wie bereits bei den Signalverläufen in Figur 3a beschrieben - die Abschaltzeitpunkte für die beiden Schaltelemente mit Hilfe der ersten und zweiten Stellgröße SG1, SG2 abgeleitet.

Mit Hilfe des erfindungsgemäßen Ansteuerverfahrens werden auf einfache Weise die beiden pulsweiten- und frequenzmodulierten Steuersignale Sl, S2 stets zum selben Zeitpunkt gesetzt und damit die Schaltelemente zu einem gemeinsamen Einschaltzeitpunkt eingeschaltet. Aufgrund der unterschiedlichen Stellgrößen SG1, SG2 für die beiden Schaltelemente können die beiden pulsweiten- und frequenzmodulierten Steuersignale zu unterschiedlichen Ausschaltzeitpunkten zurückgesetzt werden. Außerdem ist es möglich, dass das Hochsetzer-Schaltelement konstant ausgeschaltet bzw. das zugehörige, zweite Steuersignal S2 konstant zurückgesetzt bleibt, wenn die zweite Stellgröße SG2 für das Hochsetzer-Schaltelement kleiner als der Offset-Wert CToffset ist. D.h. es wird nur das erste Schaltelement bzw. das Tiefsetzer-Schaltelement getaktet und der Tief-Hochsetzsteller TH wird im Tiefsetzer-Modus betrieben.

## Patentansprüche

1. Verfahren zum Ansteuern eines Tief-Hochsetzstellers (TH) mit zumindest zwei Schaltelementen und einer Induktivität, von welchem eine Eingangsspannung (Ue) in eine geregelte Ausgangsspannung (Ua) umgewandelt wird, wobei die zwei Schaltelemente des Tief-Hochsetzstellers (TH) durch pulsweiten- und frequenzmodulierte Steuersignale (Sl, S2) mit einer gemeinsamen, variablen Schaltfrequenz angesteuert werden, und wobei ein jeweiliges pulsweiten- und frequenzmoduliertes Steuersignal (Sl, S2) für ein jeweiliges Schaltelement aus einer von einer Reglereinheit (RE) zur Regelung der Ausgangsspannung zur Verfügung gestellten Stellgröße (SG) abgeleitet wird, ***dadurch gekennzeichnet, dass*** laufend ein Spannungsverlauf an den Schaltelementen ermittelt wird (101), dass bei Erkennen eines Spannungsminimums des ermittelten Spannungsverlaufs an den Schaltelementen (102) die Schaltelemente eingeschaltet werden (104), sofern eine vorgegebene minimale Periodendauer (Tmin) überschritten wurde (103), und dass die Schaltelemente nach Ablauf einer vorgegebenen maximalen Periodendauer (Tmax) eingeschaltet werden (104), wenn im Spannungsverlauf an den Schaltelementen bis zum Ablauf der vorgegebenen maximalen Periodendauer (106) kein Spannungsminimum festgestellt wird (102).

2. Verfahren nach Anspruch 1, ***dadurch gekennzeichnet, dass*** ein Abschaltzeitpunkt des jeweiligen Schaltelements durch die von der Reglereinheit (RE) zur Verfügung gestellte Stellgröße festgelegt wird (105), aus welcher das jeweilige pulsweiten- und frequenzmodulierte Steuersignal (Sl, S2) für das jeweilige Schaltelement abgeleitet wird.

3. Verfahren nach einem der vorangegangenen Ansprüche, ***dadurch gekennzeichnet, dass*** zum Generieren des jeweiligen pulsweiten- und frequenzmodulierten Steuersignals (Sl, S2) zum Takten des jeweiligen Schaltelements aus der von der Reglereinheit (RE) zur Regelung der Ausgangsspannung (Ua) zur Verfügung gestellten Stellgröße (SG) eine für das jeweilige Schaltelemente spezifische Stellgröße (SG1, SG2) in Abhängigkeit von der jeweiligen Eingangsspannung (Ue) und der jeweiligen Ausgangsspannung (Ua) des Tief-Hochsetzstellers (TH) abgeleitet wird.

4. Verfahren nach einem der vorangegangenen Ansprüche, ***dadurch gekennzeichnet, dass*** zum Generieren der pulsweiten- und frequenzmodulierten Steuersignale (Sl, S2) für die Schaltelemente ein Sägezahnsignal (CT, CT1) verwendet wird, welches von einer Oszillatoreinheit (OS) erzeugt wird.

5. Verfahren nach Anspruch 4, ***dadurch gekennzeichnet, dass*** zum Sägezahnsignal (CT) ein vorgebbarer Offset-Wert (CToffset) addiert wird.

6. Verfahren nach einem der vorgegangenen Ansprüche, ***dadurch gekennzeichnet, dass*** als Reglereinheit (RE) zur Regelung der Ausgangspannung (Ua) des Tief-Hochsetzstellers (TH) ein Spannungsregler mit einer unterlagerten Stromregelung verwendet wird.

7. Verfahren nach einem der vorgegangenen Ansprüche, ***dadurch gekennzeichnet, dass*** als Reglereinheit (RE) eine so genannte Average Current Mode Control verwendet wird.

8. Verfahren nach einem der Ansprüche 1 bis 7, ***dadurch gekennzeichnet, dass*** für eine Ermittlung des Spannungsverlaufs an den Schaltelementen und zum Erkennen eines Minimums des Spannungsverlaufs eine Spannungsmessung an zumindest einem der Schaltelemente des Tief-Hochsetzstellers (TH) durchgeführt wird (101).

9. Verfahren nach einem der Ansprüche 1 bis 7, ***dadurch gekennzeichnet, dass*** zum Erkennen eines Minimums des Spannungsverlaufs an den Schaltelementen ein Stromverlauf durch die Induktivität des Tief-Hochsetzstellers (TH) erfasst und ausgewertet wird (101).

10. Verfahren nach einem der Ansprüche 1 bis 7, ***dadurch gekennzeichnet, dass*** zum Erkennen eines Minimums des Spannungsverlaufs an den Schaltelementen ein Spannungsverlauf an einer Hilfswicklung der Induktivität des Tief-Hochsetzstellers (TH) erfasst und ausgewertet wird (101).

11. Verfahren nach einem der vorangegangenen Ansprüche, ***dadurch gekennzeichnet, dass*** die vorgegebene minimale Periodendauer (Tmin), durch welche eine maximale Schaltfrequenz für die Schaltelemente festgelegt wird, anhand eines vorgebbaren Wirkungsgrads für den Tief-Hochsetzsteller (TH) abgeleitet werden kann.

12. Verfahren nach einem der Ansprüche 1 bis 10, ***dadurch gekennzeichnet, dass*** die vorgegebene minimale Periodendauer (Tmin), durch welche eine maximale Schaltfrequenz für die Schaltelemente festgelegt wird, anhand vorgebbarer maximaler Störaussendungen in einem bestimmten Frequenzbereich für den Tief-Hochsetzsteller (TH) abgeleitet werden kann.

13. Verfahren nach einem der vorangegangenen Ansprüche, ***dadurch gekennzeichnet, dass*** die vorgegebene maximale Periodendauer (Tmax), durch welche eine minimale Schaltfrequenz für die Schaltelemente festgelegt wird, aus einer Dynamik der Reglereinheit (RE) ermittelt werden kann.

14. Verfahren nach einem der vorangegangenen Ansprüche, ***dadurch gekennzeichnet, dass*** der Tief-Hochsetzsteller (TH) in Abhängigkeit von der Eingangsspannung (Ue) und der Ausgangsspannung (Ua) in einem Tiefsetzer-Modus oder in einem Mischbetrieb betrieben wird, wobei im Tiefsetzer-Modus nur ein erstes Schaltelement der zwei Schaltelemente als Tiefsetzer-Schaltelement getaktet wird, und wobei im Mischbetrieb beide Schaltelemente getaktet werden.

15. Verfahren nach einem der vorangegangenen Ansprüche, ***dadurch gekennzeichnet, dass*** der Tief-Hochsetzsteller (TH) in einem kontinuierlichen Betrieb und in einem diskontinuierlichen Betrieb betrieben wird.
